# EUROPEAN PATENT APPLICATION

(11) **EP 3 872 497 A1**
(43) Date of publication of application: **01.09.2021**
(21) Application number: 19874978.0
(22) Date of filing: 21.10.2019
(51) Int. Cl.: G01N 35/04

(54) **AUTOSAMPLER, AUTOMATIC ANALYSIS DEVICE, SAMPLING METHOD, AND AUTOMATIC INSPECTION METHOD**

(30) Priority: 23.10.2018 JP 2018198898
(71) Applicant: Sekisui Medical Co., Ltd., Tokyo 103-0027 (JP)
(72) Inventor: KAWABE, Toshiki, Tokyo 103-0027 (JP)
(74) Representative: Schäfer, Matthias W.
(86) International application number: PCT/JP2019/041244
(87) International publication number: WO 2020/085272

(57) **Abstract**

Provided is a small and high-performance autosampler.

Included are an installation part allowing a plurality of racks to be installed therein, an installation part movement mechanism which can move the installation part back and forth in a predetermined installation part transport direction and successively transfers the plurality of racks to a transport position 12, and a rack movement mechanism which can move the racks at the transport position back and forth in a predetermined rack transport direction, moves the racks forward in the rack transport direction to send out the racks, and moves the racks backward to send the racks back to the installation part after specimens are sampled from the specimen containers held in the racks, in which the racks are transferred to the transport position 12 by moving the installation part forward or backward as necessary, information about inspection item content is accumulated using the installation part as a unit, and an accumulation result is compared with the amount of measurement resources, so that sampling is started after it is determined that the measurement resources are not insufficient.

## Description

### TECHNICAL FIELD

The present invention relates to an autosampler and a sampling method for automatically collecting specimens from a specimen container, and an automatic analysis device and an automatic analysis method adopting the same.

### BACKGROUND ART

In general, some automatic analysis devices for biological samples such as blood and urine automatically transport a plurality of specimen containers containing specimens and perform successive analysis. For example, an automatic analysis device disclosed in Patent Document 1 includes a rack set part (62), a rack transfer part (65), a specimen suction part (67), a rack buffer part (68), a rack recovery part (63), etc. Further, a rack (9) holding a predetermined number of specimen containers is transported between these parts, and the rack (9) from which an inspection result is obtained is sent to the rack recovery part (63) (paragraphs 0037 to 0040, etc.).

Further, in an automatic analysis device disclosed in Patent Document 2, a rack (3) holding a predetermined number of specimen containers is installed in a predetermined installation part (11) and transported in a predetermined direction (D1). Further, in Patent Document 2, when the rack (3) after completion of inspection is replaced with a rack not undergoing inspection, the installation part (11) on which the rack (3) is installed moves in a direction opposite to a previous movement direction.

### CITATION LIST

### PATENT DOCUMENT

Patent Document 1: JP 2010-181197 A
Patent Document 2: JP 5842785 B2

### SUMMARY OF THE INVENTION

### PROBLEM TO BE SOLVED BY THE INVENTION

Incidentally, in the automatic analysis device of the type disclosed in Patent Document 1, the rack set part (62), the rack buffer part (68), and the rack recovery part (63) are provided, and it is necessary to ensure an installation space for each part in the automatic analysis device. For this reason, the automatic analysis device tends to be large.

On the other hand, in the automatic analysis device of the type disclosed in Patent Document 2, the installation part (11) on which the rack is installed moves in a positive direction and a reverse direction with respect to the installation part movement direction (D1). For this reason, when compared to the automatic analysis device of the type disclosed in Patent Document 1, a mechanical configuration related to movement of the rack is simple, and the autosampler and the automatic analysis device can be miniaturized. This type of automatic analysis device is suitable for a small automatic analysis device (and an autosampler) due to the simple mechanical configuration. However, there is no disclosure about another requirement at an inspection site, that is, preventing, in advance, a situation in which measurement needs to be suspended due to lack of reagents after start of analysis, and high performance having such a function is required. However, since the mechanical configuration is simple, in the case of considering further improvement in performance of the small automatic analysis device (and the autosampler), positions that can be improved are limited, and improvement in performance is difficult.

The invention has been made to solve such a problem, and an object of the invention is to provide a small and high-performance autosampler and an automatic analysis device using the same. In addition, another object of the invention is to provide a sampling method capable of improving performance of a small autosampler, and an automatic analysis method using the same.

### MEANS FOR SOLVING PROBLEM

(1) To achieve the objects, the invention is an autosampler for sending out a rack holding one or a plurality of specimen containers from a predetermined transport position, inquiring of a management computer about an inspection item based on identification information attached to the specimen container or collating an inspection item registered in an automatic analysis device thereof, and sampling a specimen from the specimen container based on a response from the management computer or the automatic analysis device, the autosampler including
   an installation part allowing a plurality of racks to be installed therein,
   an installation part moving means capable of moving the installation part back and forth in a predetermined installation part transport direction, the installation part moving means successively transferring the plurality of racks to the transport position, and
   a rack moving means capable of moving the racks at the transport position back and forth in a predetermined rack transport direction, the rack moving means moving the racks forward in the rack transport direction to send out the racks from the installation part, and moving the racks backward to send the racks back to the installation part after specimens are sampled from the specimen containers held in the racks,
   in which the racks are transferred to the transport position by moving the installation part forward or backward as necessary, and sampling is started after completing accumulation of information about the inspection item corresponding to a specimen contained in the specimen container on the installation part.
(2) Further, the invention is the autosampler further including a measurement allowance determining means for comparing accumulation content of the information about the inspection item with measurement resources necessary for inspection of the accumulation content, in which when it is determined that the measurement resources are insufficient, a notification of measurement not allowed is made, and a measurement operation is suspended.
(3) Further, the invention is an automatic analysis device including the autosampler according to item (1) or (2) .
(4) Further, the invention is a sampling method for sending out a rack holding one or a plurality of specimen containers from a predetermined transport position, inquiring of a management computer about an inspection item based on identification information attached to the specimen container or collating an inspection item registered in an automatic analysis device thereof, and sampling a specimen from the specimen container based on a response from the management computer or the automatic analysis device, the sampling method including
   a first step of successively transferring, by an installation part moving means capable of moving an installation part of the rack back and forth in a predetermined installation part transport direction, a plurality of racks installed in the installation part to the transport position as necessary,
   a second step of moving, by a rack moving means, the racks at the transport position forward in a predetermined rack transport direction to send out the racks, and
   a third step of starting sampling after completing accumulation of information about the inspection item using the specimen container on the installation part as a unit.
(5) Further, the invention is the sampling method further including a fourth step of comparing accumulation content of the information about the inspection item with measurement resources necessary for inspection of the accumulation content, and making a notification of measurement not allowed and suspending a measurement operation when it is determined that the measurement resources are insufficient.
(6) Further, the invention is a method of automatically inspecting a specimen performed using a specimen sampled by the sampling method according to item (4) or (5).

### EFFECT OF THE INVENTION

According to the above configuration, it is possible to provide a small and high-performance autosampler and an automatic analysis device using the same. In addition, according to the above configuration, it is possible to provide a sampling method capable of improving performance of a small autosampler, and an automatic analysis method using the same.

### BRIEF DESCRIPTION OF DRAWINGS

Fig. 1(a) is a schematic plan view illustrating an autosampler according to an embodiment of the invention, Fig. 1(b) is a perspective view illustrating a rack and an installation part, and Fig. 1(c) is a perspective view illustrating the rack and the installation part from a direction different from that of Fig. 1(b);
Fig. 2 is a block diagram illustrating an outline of a controller and peripheral equipment thereof;
Figs. 3(a) to 3(e) are explanatory views illustrating processes of sampling after checking the amount of reagent in order;
Figs. 4(a) to 4(c) are explanatory views illustrating processes of sampling after checking the amount of reagent following Fig. 3(e) in order;
Figs. 5(a) to 5(f) are explanatory views illustrating processes of sampling after checking the amount of reagent when the rack is added in order;
Figs. 6(a) to 6(c) are explanatory views illustrating processes of sampling after checking the amount of reagent following Fig. 5(f) in order;
Figs. 7(a) to 7(d) are explanatory views illustrating processes of sampling of a conventional method in order; and
Figs. 8(a) to 8(c) are explanatory views illustrating processes of sampling of the conventional method following Fig. 7(d) in order.

### MODE(S) FOR CARRYING OUT THE INVENTION

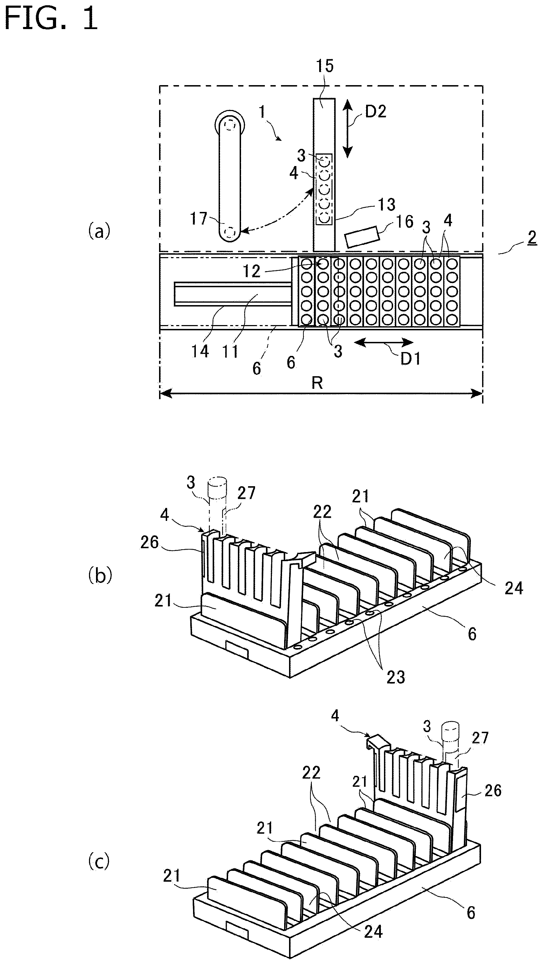

An autosampler according to an embodiment of the invention, an automatic analysis device including the autosampler, and a sampling method will be described with reference to the drawings. Fig. 1(a) illustrates an autosampler 1 according to the present embodiment. The autosampler 1 is included in an automatic analysis device 2 used for, for example, blood coagulation, biochemical test, immunological test, etc., and can automatically and successively transport a plurality of specimen containers 3 (here, 5 containers/rack × 10 racks) containing specimens in a direction D1. Here, the automatic analysis device 2 is configured to include the autosampler 1. However, in Fig. 1(a), in order to simplify the illustration, a part of the automatic analysis device 2 in the vicinity of the autosampler 1 is surrounded by an alternate long and short dash line.

The specimen containers 3 contain specimens (in addition, a calibrator, control samples, and normal plasma), and is set in the autosampler 1 in a state of being held by a rack 4. In the present embodiment, a maximum of five specimen containers 3 can be held in one rack 4. However, the invention is not limited thereto, and one to four racks may be held with a vacancy in each rack 4. Further, the number of specimen containers 3 that can be held by the rack 4 is not limited to five, and may be fewer or more.

The autosampler 1 includes an installation part 6 (rack tray), and a plurality of racks 4 can be installed on the installation part 6. In the present embodiment, ten racks 4 can be installed on the installation part 6. However, the invention is not limited thereto, and the maximum loadable number of racks 4 that can be installed on the installation part 6 can be appropriately changed.

The installation part 6 can be moved in both a leftward direction and a rightward direction in Fig. 1(a) by an installation part movement mechanism 11. This movement direction is hereinafter referred to as "installation part movement direction D1". The installation part movement mechanism 11 may include, for example, a rail that movably supports the installation part 6, a drive source such as a motor (not illustrated), and a power transmission mechanism such as a gear. Further, the installation part movement direction D1 includes a forward direction (direction from right to left in the figure) which is a predetermined direction and a backward direction (direction from left to right in the figure) which is a reverse direction with respect to the forward direction.

In the autosampler 1, the racks 4 are sent out one by one along a rack movement direction D2 for sampling from a predetermined transport position 12. The rack movement direction D2 is, for example, a direction orthogonal to the installation part movement direction D1. That is, in the present embodiment, the installation part 6 moves in the forward direction (direction from right to left in the figure) of the installation part movement direction D1, and the plurality of racks 4 on the installation part 6 are transported to the transport position 12. Thereafter, the racks 4 are sent out from the transport position 12 along the rack movement direction D2 orthogonal to the installation part movement direction D1.

The racks 4 are transported in the rack movement direction D2 by a rack movement mechanism 13. Although not illustrated, for example, the rack movement mechanism 13 may include a rail that supports the racks 4, a drive source such as a motor, and a power transmission mechanism such as a gear. Further, the rack movement direction D2 includes a forward direction in which the racks 4 are sent out from the installation part 6 (direction from bottom to top in the figure) and a backward direction in which the racks 4 are returned to the installation part 6 (direction from top to bottom in the figure).

For example, each of the racks 4 is provided with an identification information recording part 26 (Figs. 1(b) and 1(c)) such as a barcode. In addition, each of the specimen containers 3 is provided with an identification information recording part 27. Each of the identification information recording parts 26 and 27 can be formed by attaching a label sticker to a predetermined site of the rack 4 or the specimen container 3. Here, a more specific configuration of the rack 4 and the installation part 6 will be described later.

In the present embodiment, as illustrated in Fig. 1(a), when the rack 4 is sent out from the transport position 12 on an installation part transport path 14 to a rack transport path 15, identification information of the identification information recording part 26 (Figs. 1(b) and 1(c)) is read by a reading part 16. Further, identification information displayed on the identification information recording part 27 of each of the specimen containers 3 is read by the reading part 16. Here, the reading part 16 may be provided separately for each of the specimen container 3 and the rack 4.

When the identification information read by the reading part 16 is read, the identification information is successively transmitted to a controller 31 described later, and is used as information for controlling various functions such as transport and sampling. A configuration of the controller 31 and specific processing based on the identification information will be described later.

As illustrated in Fig. 1(a), the rack 4 sent out from the installation part transport path 14 on which the installation part 6 moves to the rack transport path 15 temporarily stops on the rack transport path 15, and a specimen is collected (sampled) from the specimen container 3 held in the rack 4 by a specimen collection mechanism 17.

The specimen collection mechanism 17 includes, for example, a rotation mechanism, an elevating mechanism, a transfer mechanism, etc., and a movable portion includes these mechanisms. Further, a nozzle for collecting a specimen (not illustrated) is provided at a distal end of the movable portion. Furthermore, in one example, after rotating from a standby position to move the nozzle to an upper part of the specimen container 3, the specimen collection mechanism 17 can lower the nozzle to suck the specimen in the specimen container 3, and then raise the nozzle to rotate and move the nozzle to a discharge position. At the discharge position, the specimen collection mechanism 17 lowers the nozzle and discharges the specimen into a reaction vessel disposed in advance, so that a certain amount of the specimen is discharged. Thereafter, the specimen collection mechanism 17 raises the nozzle and further rotates and moves the nozzle to a cleaning position (not illustrated) . Then, the specimen collection mechanism 17 cleans the nozzle, and returns the nozzle to the standby position by rotating and moving the nozzle after cleaning. Thereafter, a reagent is added to the reaction vessel, reaction is carried out for a predetermined reaction time, and then a reaction solution is optically measured. Note that it is natural that this procedure is an example and use for other chemical analyzes is allowed.

After the specimens are collected from all the specimen containers 3 held in the rack 4, the rack 4 is sent back to the installation part 6 along the rack movement direction D2. In this way, from when the rack 4 is sent out from the transport position 12 and until the rack 4 is sent back to the installation part 6, the installation part 6 is in a stopped state (note that specimens may be collected from only a predetermined specimen container 3 according to a program) . In addition, after the rack 4 undergoing collection of specimens is sent back to the installation part 6, the installation part 6 moves along the installation part movement direction D1, and another rack 4 is sent to the transport position 12.

In addition, the movement direction of the installation part 6 is not limited to the forward direction (direction from right to left in the figure) of the installation part movement direction D1, and may be the backward direction (direction from left to right in the figure). Examples of a case where movement in the backward direction is performed may include a case where racks are replaced or added during the analysis. In addition, a case where re-inspection is performed can be given as an example.

In the present embodiment, during a pre-suction preparation period in which the nozzle of the specimen collection mechanism 17 rotates from the standby position and moves to the upper part of the specimen container 3, an operation for sending out the rack 4 from the transport position 12 (including a reading operation by the reading part 16) is performed. In the pre-suction preparation period, in a process of rotating the nozzle of the specimen collection mechanism 17 from the standby position, a buffer solution, etc. to be discharged to the reaction vessel at the same time as the specimen may be sucked.

In addition, after the nozzle of the specimen collection mechanism 17 sucks the specimen in the specimen container 3, during a discharge period from when the nozzle of the specimen collection mechanism 17 starts to rotate to the discharge position until the nozzle of the specimen collection mechanism 17 finishes rising after discharging the specimen at the discharge position, an operation for sending the rack 4 back to the installation part 6 is performed. Further, after the discharge period, during a cleaning period in which the specimen collection mechanism 17 rotates to perform cleaning, an operation for moving the installation part 6 to move another rack 4 to the transport position 12 is performed.

In this way, by performing an operation for moving the rack 4 or the installation part 6 using a period during which the specimen collection mechanism 17 is performing an operation other than an operation with respect to the rack 4, it is possible to prevent inspection throughput from decreasing.

Next, the installation part 6 on which the rack 4 is installed will be described more specifically. Figs. 1(b) and 1(c) illustrate an example of the rack 4 and the installation part 6. In the example of Figs. 1(b) and 1(c), a plurality of partition plates 21 is provided at certain intervals on the installation part 6. Further, an installation region 22 for installing the rack 4 is formed between adjacent partition plates 21. Furthermore, the rack 4 is installed in the installation region 22 so that the rack 4 can move in the forward direction of the rack movement direction D2. Here, in Figs. 1(b) and 1(c), only one rack 4 is installed on the installation part 6, and only one specimen container 3 is held in the rack 4 as indicated by an alternate long and two short dashes line.

A rack state lamp 23 is disposed in the installation part 6 in association with each installation region 22 individually. Each rack state lamp 23 can report a state of each rack 4 in the corresponding installation region 22 in units of racks. In the present embodiment, each rack state lamp 23 indicates whether each rack 4 is in an uninspected state, an inspecting state (including a re-inspecting state), or an inspection completed state by a color or a light emission mode such as blinking.

Here, the uninspected state is a state before the corresponding rack 4 is sent out from the transport position 12, and means a state in which the specimen in the specimen container 3 held in the rack 4 has not been inspected. In addition, the inspecting state is a state in which inspection for the rack 4 sent back to the installation part 6 is being executed (including a state in which re-inspection is required), and means a state in which the rack 4 should not be removed from the installation part 6. Further, the inspection completed state is a state in which inspection for the rack 4 sent back to the installation part 6 has been completed, and means that there is no problem even when the rack 4 is removed from the installation part 6.

In the present embodiment, each rack state lamp 23 is turned ON when in the uninspected state, blinks in the inspecting state, and is turned OFF in the inspection completed state. However, the invention is not limited to such a configuration, and it is possible to adopt a configuration in which each rack state lamp 23 reports at least one of the above-mentioned states by emitting light in a different light emission mode.

In addition, a reporting part for reporting a state of each rack 4 is not limited to one that emits light such as the rack state lamp 23, and it is possible to adopt various configurations such as one that reports a rack state distinguished by dial tone from a speaker, and a combination thereof. Note that it is possible to configure the installation part 6 so that the reporting part is not included. Note that as a configuration in which the reporting part is not included, for example, a display device (not illustrated) included in the automatic analysis device 2 may display the state of the rack 4.

In addition, in the present embodiment, some (here, one) of a plurality of installation regions 22 is defined as a priority installation part 24. The priority installation part 24 constitutes a priority installation part 24 for installing a rack 4 to be subjected to inspection preferentially. Here, it is preferable that the priority installation part 24 is provided in such a manner that an operator can distinguish the priority installation part 24 from other installation regions 22.

When a rack 4 is installed in such a priority installation part 24, the installation part movement mechanism 11 (Fig. 1(a)) moves the rack 4 in the priority installation part 24 to the transport position 12 in preference to a rack 4 placed in another installation region 22. Then, the rack 4 in the priority installation part 24 reaching the transport position 12 is sent out from the transport position 12 by the rack movement mechanism 13.

Although only one is illustrated in Figs. 1(b) and 1(c), each rack 4 installed on the installation part 6 has a shape that can hold test tube-shaped specimen containers 3 (only one is illustrated by an alternate long and two short dashes line in the figure) upright and side by side. In each rack 4, a predetermined number (here, five) of specimen containers 3 can be held along a longitudinal direction thereof. Each rack 4 is installed on the installation part 6 in a state where the longitudinal direction extends along the rack movement direction D2.

Further, each rack 4 is provided with the above-mentioned identification information recording part 26. As the identification information recording part 26, one having a barcode display can be adopted. However, the invention is not limited thereto, and it is possible to adopt various recording media such as those displaying a two-dimensional code, IC chips, or those incorporating an RF tag for RFID.

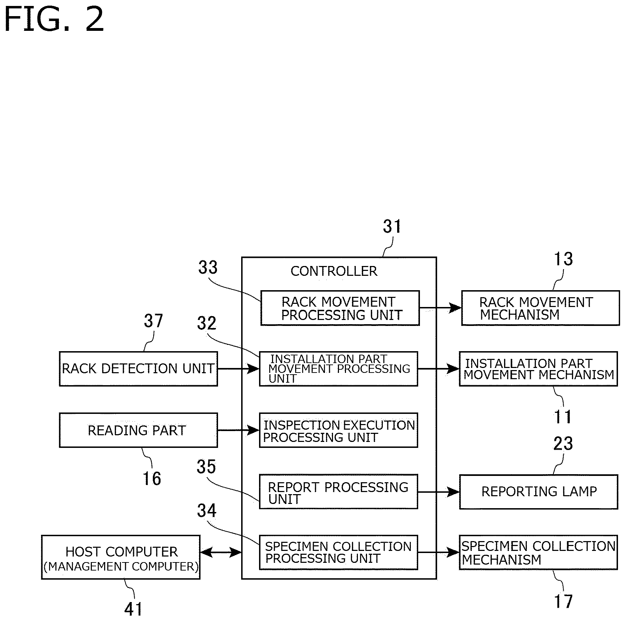

Next, the above-mentioned controller 31 will be described. Fig. 2 schematically illustrates a configuration of the controller 31. The controller 31 is configured by combining a CPU, ROM, RAM, input/output ports, etc., and operates based on a predetermined program. Further, the controller 31 operates as various functional units such as an installation part movement processing unit 32, a rack movement processing unit 33, a specimen collection processing unit 34, and a report processing unit 35. Here, the controller 31 may control the operation of the entire analysis device. Further, for example, the controller may be divided for each partial configuration of the autosampler 1, etc., and the controller 31 may be configured by a plurality of controllers.

Of the various functional units described above, the installation part movement processing unit 32 has a function of controlling the operation of the installation part movement mechanism 11 to move the installation part 6 along the installation part movement direction D1. The installation part movement processing unit 32, the installation part movement mechanism 11, etc. are included in an installation part moving means. By moving the installation part 6, the installation part moving means successively moves the plurality of racks 4 installed on the installation part 6 to the transport position 12.

Next, the rack movement processing unit 33 has a function of controlling the operation of the rack movement mechanism 13 to move the rack 4 along the rack movement direction D2. The rack movement processing unit 33, the rack movement mechanism 13, etc. are included in a rack moving means. The rack moving means sends out the rack 4 at the transport position 12, and sends the rack 4 back to the installation part 6 after a specimen is collected from the specimen container 3 held in the rack 4.

Further, the specimen collection processing unit 34 performs a process for controlling an operation of the specimen collection mechanism 17. The specimen collection processing unit 34, the specimen collection mechanism 17, etc. are included in a specimen collecting means. The specimen collecting means collects a specimen from the specimen container 3 in the rack 4 sent out from the installation part 6.

In addition, the specimen collection processing unit 34 is included in an inspection executing means that inspects the collected specimen. The inspection executing means stores an inspection result for each specimen container 3 in a predetermined storage unit (not illustrated) in association with identification information read from the identification information recording parts 26 and 27 of the specimen container 3 and the rack 4.

The report processing unit 35 has a function of controlling the light emission mode of each rack state lamp 23 based on the inspection result by the specimen collection processing unit 34. Further, the report processing unit 35 reports the state of the rack 4 corresponding to each rack state lamp 23. The report processing unit 35, each rack state lamp 23, etc. are included in a reporting means for reporting whether or not an inspection for each rack 4 is being executed.

Whether or not the rack 4 is installed in each installation region 22 of the installation part 6 can be detected by a rack detection unit 37. The rack detection unit 37 can be provided in the installation part 6 in association with each installation region 22. The rack detection unit 37 can include, for example, various non-contact type sensors, image recognition sensors, etc. Further, as the non-contact type sensors, it is possible to adopt various general optical sensors, proximity sensors (induction type proximity sensor, capacitance type proximity sensor), etc. However, the invention is not limited thereto, and various types can be adopted as long as it is possible to detect the presence or absence of the rack 4.

In the present embodiment, when the rack 4 is sent back to the installation part 6, the installation part 6 is moved in a predetermined direction (direction from right to left in Fig. 1(a)) by the installation part movement processing unit 32, and racks 4 not undergoing inspection are successively moved to the transport position 12. Further, when any rack 4 moving more forward direction than the transport position 12 in the installation part movement direction D1 is replaced with a rack 4 not undergoing inspection after inspection is completed, the rack 4 is moved to the transport position 12 in the backward direction by moving the installation part 6 in a reverse direction with respect to the predetermined direction (direction from left to right in Fig. 1(a)). In addition, when inspection is performed once and it is necessary to perform re-inspection for any rack 4 passing the transport position 12, the installation part 6 is similarly moved in the backward direction.

Note that whether or not the rack 4 is sent back to the installation part 6 can be determined by the controller 31 based on, for example, the end of processing by the rack movement processing unit 33 or a detection signal from the rack detection unit 37. Furthermore, whether or not any rack 4 after completion of inspection is replaced with the rack 4 not undergoing inspection can be determined based on, for example, a detection signal from the rack detection unit 37. In addition, whether or not it is necessary to perform re-inspection for any rack 4 can be determined based on a determination result by a re-inspection necessity determination unit (not illustrated). Here, the re-inspection necessity determination unit determines that re-inspection is necessary when a predetermined automatic re-inspection condition set in advance is satisfied, or when there is an instruction for re-inspection (re-inspection instruction) from a management computer (described later).

As described above, in the present embodiment, by moving the installation part 6 in the predetermined direction (forward direction) or the reverse direction with respect to the predetermined direction (backward direction), it is possible to successively move the rack 4 not undergoing inspection installed in the installation part 6, the rack 4 not undergoing inspection replaced after inspection is completed, and the rack 4 requiring re-inspection, respectively, to the transport position 12 and send out the racks 4. For this reason, by replacing the racks 4 undergoing inspection with the racks 4 not undergoing inspection in order, it is possible to continuously perform inspection for the racks 4 whose number is larger than the number of racks 4 that can be installed in the installation part 6.

Further, in the present embodiment, the installation part 6 can move forward and backward on the installation part transport path 14, and the necessary rack at the point in time can be stopped at the transport position 12 by forward and backward movement of the installation part 6. Therefore, when compared to an automatic analysis device of a type in which a rack is temporarily moved backward to a buffer part, no lane or space is required for temporary storage of the rack, and it is possible to miniaturize the autosampler 1 and the automatic analysis device 2.

In addition, for example, when compared to a configuration in which a plurality of trays holding a plurality of racks 4 is installed on a belt conveyor, it is possible to narrow a moving range of the racks 4 (a moving range R of the installation part 6 illustrated in Fig. 1(a)) . For this reason, the device can be miniaturized. In addition, even when the rack 4 requiring re-inspection is moved to the transport position 12 again, a moving time of the rack 4 can be shortened, and inspection efficiency can be improved.

Further, when the rack 4 is installed in the priority installation part 24 of the installation part 6 by processing of the installation part movement processing unit 32, the rack 4 installed in the priority installation part 24 can be preferentially moved to the transport position 12. Note that whether or not the rack 4 is installed in the priority installation part 24 of the installation part 6 can be determined based on, for example, a detection signal from the rack detection unit 37.

In this way, by preferentially moving the rack 4 installed in the priority installation part 24 to the transport position 12 and sending out the rack 4 from the transport position 12, it is possible to preferentially perform inspection for the rack 4. In this case, it is unnecessary to perform an operation of designating the rack 4 to be subjected to inspection preferentially, etc., and operability can be improved.

Further, in the present embodiment, whether or not inspection for each rack 4 is being executed is verified based on reporting by the rack state lamp 23, and the rack 4 for which inspection is not being executed can be replaced with another rack 4. In this way, it is possible to facilitate an operation of replacing the rack 4 with respect to the installation part 6, so that the inspection efficiency can be improved.

In particular, in the present embodiment, the uninspected state, the inspecting state, and the inspection completed state are checked based on reporting by the rack state lamp 23, and the rack 4 not in the inspected state can be replaced with another rack 4. For example, inspection can be continuously performed by successively replacing the racks 4 in the inspection completed state with the racks 4 not undergoing inspection. In this way, by reporting the state of the rack 4 in an easy-to-understand manner, the inspection efficiency can be effectively improved. Further, when there is a specimen container that has been put off in the uninspected state, it is possible to report the presence of a rack holding such a specimen container by, for example, the rack state lamp 23.

As described above, the autosampler 1 of the present embodiment has a compact configuration. Further, in the present embodiment, in order to further improve the performance of the autosampler 1, sampling (post-reagent amount check sampling) is performed after checking the amount of reagent required for inspection. Hereinafter, a description will be given of a feature of the post-reagent amount check sampling. However, in describing the post-reagent amount check sampling, first, a description will be given of an example of conventional sampling in which the amount of reagent is not checked in advance. Note that the term "sampling" is used in the same meaning as the above-mentioned "collecting".

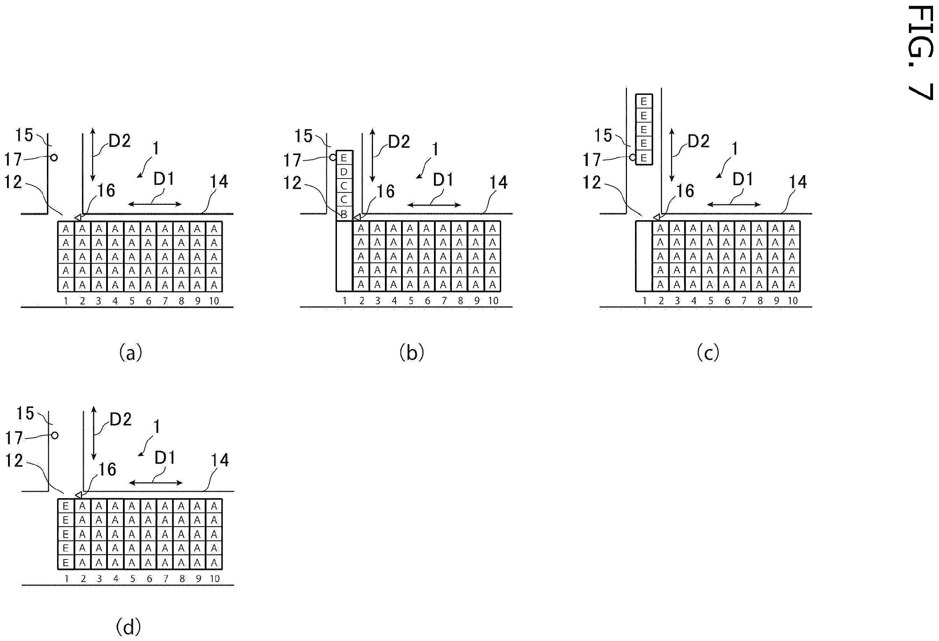

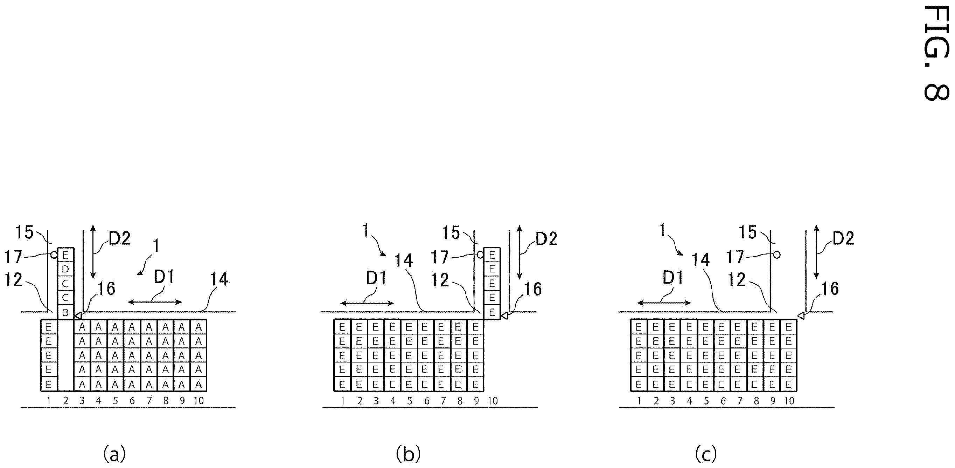

Figs. 7 (a) to 7 (d) and Figs. 8 (a) to 8 (c) illustrate a conventional sampling mode in which the amount of reagent is not checked in advance. Here, even though Figs. 7 and 8 illustrate a plurality of specimen containers (3) and racks (4), in order to avoid complicating the drawings, reference symbols for these parts are not illustrated.

In Fig. 7(a), ten racks are arranged side by side from the left side to the right side in the figure. In the figure, for the sake of description, numbers "1" to "10" are assigned corresponding to the installation positions (sections) of the respective racks. In the following, the racks installed at the respective positions may be referred to as "first rack" to "tenth rack" in combination with numbers as necessary.

The longitudinal direction of each rack is oriented in a vertical direction in the figure, and each rack holds five specimen containers as described above. In the following, the respective specimen containers for each rack may be referred to as a "first container" to a "fifth container" in the order from the upper side to the lower side in the figure. Further, when the respective specimen containers are individually distinguished, for example, the specimen containers are referred to as "the first container of the first rack", "the third container of the fifth rack", "the fifth container of the tenth rack", etc.

Here, in the figure, each specimen container is indicated by reference symbol "A", and the meaning represented by reference symbol A will be described later. Further, in Figs. 7(a) to 7(d) and Figs. 8(a) to 8(c), for simplification, the reading part 16 is indicated by a triangle mark, and the specimen collection mechanism 17 is indicated by a circle mark (○).

As described above, a state illustrated in Fig. 7 (a) is a state in which ten racks are mounted on the installation part (6). Further, Fig. 7 (a) illustrates a state in which the ten racks move on the installation part transport path 14 in a direction from right to left (forward direction) in the figure along the installation part movement direction D1 and then stop at a predetermined position.

The first rack located at the left end in Fig. 7 (a) reaches the transport position 12. Further, in Fig. 7(a), identification information (ID information) is not read (ID identification is not performed) by the identification information recording part 27 in any of the specimen containers. Further, the above-mentioned reference symbol A assigned to each specimen container indicates that ID identification has not been performed for each specimen container.

In addition, as a state of the specimen container, there are a state of "ID identified (ID reading succeeded)" (reference symbol B), a state where "inspection request content is being inquired about" (reference symbol C), a state of "inspection request content received" (reference symbol D), and a state of "sampling in progress or sampling completed" (reference symbol E).

The state of "ID identified (ID reading succeeded) " indicated by reference symbol B is a state in which identification information is read by the reading part 16 and the reading is completed (successfully) without delay without causing an error, etc. Further, the state where "inspection request content is being inquired about" indicated by reference symbol C is a state in which the read identification information is transmitted from the controller 31 to a host computer 41 (Fig. 2) as the management computer, and reception of inspection request content information from the host computer 41 is waited for. Here, the host computer 41 is disposed outside the automatic analysis device 2.

Furthermore, the state of "inspection request content received" indicated by reference symbol D is a state in which reception of the inspection request content information from the host computer 41 is completed. Further, the state of "sampling in progress or sampling completed" indicated by reference symbol E is a state in which sampling is being performed based on the inspection request content information or a state in which sampling is completed.

From the state in which ID identification has not been performed for any of the specimen containers as illustrated in Fig. 7(a) (state A), the first rack reaching the transport position 12 is sent out to the rack transport path 15 as illustrated in Fig. 7(b). In the example of Fig. 7(b), the first container of the first rack is in the state of "sampling in progress or sampling completed" indicated by reference symbol E. Further, the second container is in the state of "inspection request content received" indicated by reference symbol D, and the third container and the fourth container are in the state where "inspection request content is being inquired about" indicated by reference symbol C. Furthermore, the fifth container is in the state of "ID identified (ID reading succeeded)" indicated by reference symbol B.

That is, when the first rack is sent out to the rack transport path 15, although not illustrated, first, the first container reaches the front of the reading part 16 and stops. Then, identification information displayed on the identification information recording part 27 (Figs. 1(b) and 1(c)) of the first container is read by the reading part 16. When reading of the identification information related to the first container is completed (successfully) (reference symbol B), the read identification information is transmitted to the host computer 41 via the controller 31.

The host computer 41 searches for the inspection request content based on the received identification information. Then, information about the searched inspection request content (inspection request content information) is transmitted to the controller 31. The inspection request content includes information about items (inspection items) to be inspected for the specimen (blood, urine, etc.) contained in the specimen container (inspection item information) . Then, the controller 31 determines the required amount of specimen to be dispensed for each inspection item based on the received inspection request content.

In the controller 31, data in an analysis information table is stored in a predetermined storage means. In the analysis information table, a condition of sampling or analysis to be performed for the inspection request content is set. Further, the controller 31 controls operations such as sampling, analysis, and cleaning by referring to the analysis information table based on the inspection request content received from the host computer 41.

Then, with regard to the host computer 41, the identification information is successively transmitted to the host computer 41 each time reading of the identification information recording part 27 for each specimen container is completed (successfully) (reference symbol B). For this reason, as indicated by reference symbol B in Fig. 7(b), at a stage when ID reading related to the identification information of the fifth container is successful, transmission of the identification information related to the first container to the fourth container, which has been previously read, to the host computer 41 has been completed.

Further, in the example of Fig. 7(b), the third container and the fourth container are in the state of waiting for reception of the inspection request based on the transmitted identification information (reference symbol C). Further, with respect to the second container, the inspection request content from the host computer 41 is received through the state of reference symbol C, and the second container is in the state of reference symbol D (the state of inspection request content received). Further, the first container is in the state of reference symbol E (state of sampling in progress or state of sampling completed) based on the inspection request content from the host computer 41.

When sampling of the first container is completed as described above, the first rack moves further in the forward direction and transports the second container to the sampling position. Then, sampling is performed for the second container, and sampling of the second container is completed (reference symbol E). In this instance, although not illustrated, the third to fifth containers are in the state of "inspection request content received" (reference symbol D) or the state where "inspection request content is being inquired about" (reference symbol C).

In addition, depending on the progress status of reading by the reading part 16, the processing status of the controller 31, or the processing status of the host computer 41, one of the specimen containers may be in the state of "ID identified (ID reading succeeded)". Further, although reference symbol is not assigned, depending on the status, one of the specimens may be in the state of ID identification (ID reading) .

In the examples illustrated in Figs. 7 and 8, when sampling for a specimen container for which identification information is previously read is completed, sampling for a next container is performed. For this reason, in a status in which sampling is performed for the fifth container, as illustrated in Fig. 7(c), all the specimen containers in the first rack are in the state indicated by reference symbol E (the state of sampling in progress or the state of sampling completed).

Thereafter, as illustrated in Fig. 7(d), the first rack is transported in the backward direction on the rack transport path 15 and returned to the installation part (reference symbol omitted) on the installation part transport path 14. Further, the racks (rack group) on the installation part move forward in the rack transport path 15, and the second rack is sent to the transport position 12 to stop. Then, as illustrated in Fig. 8(a), the second rack is sent out to the rack transport path 15.

Further, although not illustrated, as in the case of the first rack, through reading of the identification information for the first container to the fifth container (reference symbol B), inquiring of the host computer 41 about the inspection request content (reference symbol C) and reception of the inspection request content from the host computer 41 (reference symbol D) are successively performed for each specimen container. Further, in response to reception of the inspection request content (reference symbol D) for each specimen container, a sampling condition is determined sequentially, and sampling is executed according to the condition (reference symbol E).

In the example of Fig. 8(a), the first container is in the state of sampling in progress or the state of sampling completed (reference symbol E), and the second container is in the state of inspection request content received (reference symbol D). Further, the third container and the fourth container are in the state where inspection request content is being inquired about (reference symbol C), and the fifth container is in the state of ID identified (ID reading succeeded) (reference symbol B).

In this way, sampling is performed for each specimen container for the subsequent racks, and when sampling for the fifth container of the tenth rack is completed as illustrated in Fig. 8 (b) (reference symbol E), sampling for all the specimen containers in the first rack to the tenth rack is completed. Then, the tenth rack moves backward toward the transport position 12 on the rack transport path 15, and the tenth rack is returned to the installation part (reference symbol omitted) as illustrated in Fig. 8(c).

The conventional sampling procedure described above can be summarized and described as the following items (1) to (5). First, (1) the identification information of the specimen container is read by the reading part 16. (2) The controller 31 inquires of the host computer 41 about the inspection items, and (3) the inspection item content (inspection item content information) is received from the host computer 41. Subsequently, (4) the sampling condition according to the inspection items is determined, and (5) sampling is executed.

However, when it takes a relatively large amount of time for inquiring of the host computer 41 about the inspection item or for response as described in items (2) and (3) above, the subsequent processing and operation are delayed. For example, the start of sampling in (5) is delayed. Depending on the scale of a hospital that uses the automatic analysis device 2, when the number of other analysis devices communicating with the host computer 41, the amount of communication, the number of relay points, etc. are large, such a state is likely to occur, and start of sampling is delayed by this amount. Then, due to the delay in sampling, the subsequent series of processing and operations will be delayed.

Further, the delay in the start of sampling leads to delay in start of sampling for the next and subsequent specimen containers, and a time required for the inspection as a whole becomes long. Then, due to the delay in the inspection, reporting a result to a subject is delayed, which hinders early utilization of an inspection result for treatment. In addition, due to the delay in the inspection, the processing capacity (the number of processes that can be processed within a certain period of time) in the autosampler 1 and the automatic analysis device 2 is reduced.

Further, when the inspection item content is received from the host computer 41 according to item (3) described above, the autosampler 1 (and the automatic analysis device 2) can detect the inspection item. Then, when the inspection item is detected, the required amount of the reagent to be used for the inspection is found for the autosampler 1 (and the automatic analysis device 2). For this reason, the controller 31 can determine whether or not the remaining amount of the reagent is sufficient for the specimen container for which the inspection request content can be detected by calculating the remaining amount of the reagent, and notify the operator of a determination result by a display device (not illustrated) provided in the automatic analysis device 2, etc.

However, when it takes a lot of time for inquiring about the inspection items or response as described above, a situation where items to be inspected and the number of measurements (the number of specimen containers) are unknown continues for a long time, and determination as to whether or not measurement is allowed is delayed accordingly. In addition, the reagents may be insufficient during the measurement without knowing the required amount of the reagents used for the measurement. Then, in such a case, the measurement is interrupted and the inspection result may not be promptly obtained.

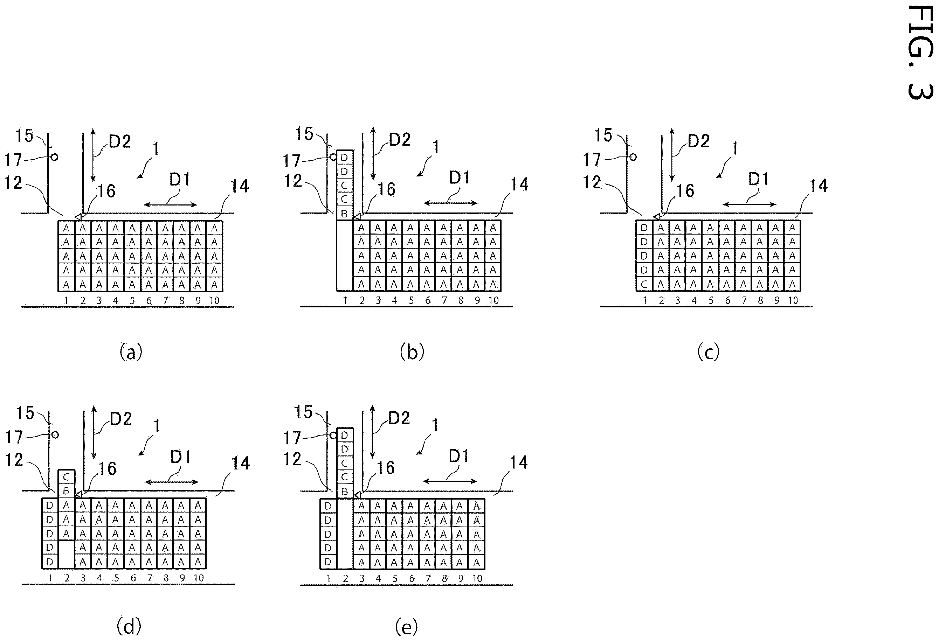

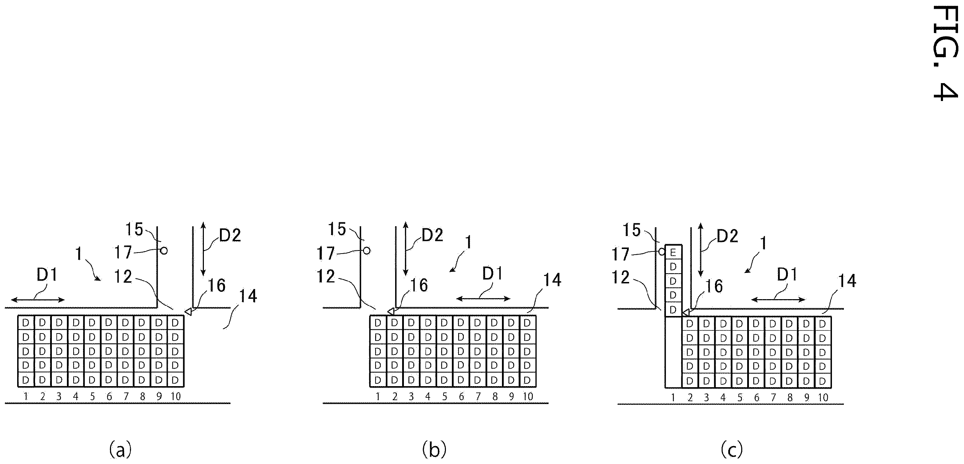

Since the conventional sampling has such circumstances, in the present embodiment, as described above, sampling is performed after checking the reagent amounts illustrated in Figs. 3(a) to 3(e) and Figs. 4(a) to 4(c) (post-reagent amount check sampling). In the following, an example of the post-reagent amount check sampling will be described based on the drawings. Note that the same number or the same reference symbol is assigned to a similar item to that of the conventional sampling illustrated in Figs. 7(a) to 7(d) and Figs. 8 (a) to 8 (c), and a description thereof will be omitted as appropriate.

Fig. 3(a) illustrates a state in which five specimen containers are held in each of the ten racks and the identification information (ID information) is not read (ID identification is not performed) in the identification information recording part 27 for any of the specimen containers (reference symbol A). From this state, as illustrated in Fig. 3 (b), the first rack is sent out to the rack transport path 15, and ID identification is performed for the first container to the fifth container. When ID identification for the first container is performed, the controller 31 (Fig. 2) transmits the identification information to the host computer 41 without waiting for completion of ID identification for the second container (or start of ID identification for the second container), and inquires about inspection request content related to the first container.

In Fig. 3(b), the first container and the second container are in a state in which inspection request content has been received (reference symbol D). In addition, the third container and the fourth container are in a state in which inspection request content is being inquired (reference symbol C). Further, ID identification is performed for the fifth container (reference symbol B).

Subsequently, in Fig. 3(c), the first rack is returned to the installation part (reference symbol omitted) . Then, the first container to the fourth container are in the state of inspection request content received (reference symbol D), and the fifth container is in the state where inspection request content is being inquired about (reference symbol C). Thereafter, inspection request content related to the fifth container is received according to the processing status of the host computer 41.

In the following Fig. 3(d), in the first rack returning to the rack transport path 15, all the first container to fifth container are in the state of inspection request content received (reference symbol D). Then, transport of the second rack sent to the transport position 12 is started, and the first container is in the state where inspection request content is being inquired about (reference symbol C). In addition, the second container is in the state of ID identified (reference symbol B), and the third container to the fifth container are in the state where identification information is not read (ID identification is not performed) (reference symbol A) .

In the status of Fig. 3(d), identification information acquired by the reading part 16 is transmitted to the host computer 41 each time reading is completed (each time the ID is identified) . Further, in the example illustrated in Fig. 3(e), the first container and the second container of the second rack are in the state of inspection request content received (reference symbol D), and the third container and the fourth container are in the state where inspection request content is being inquired about (reference symbol C). Furthermore, the fifth container is in the state of ID identified (reference symbol B).

In the status of Fig. 4 (a), the tenth rack reaches the transport position 12, and all the five specimen containers in the tenth rack are in the state of inspection request content received (reference symbol D). Further, all the racks of the first rack to the tenth rack are in the state of inspection request content received (reference symbol D).

Subsequently, as illustrated in Fig. 4(b), the first rack to the tenth rack move in the backward direction of the installation part on the installation part transport path 14, and the first rack is located at the transport position 12. In this state, as illustrated in Fig. 4(c), the first rack is transported to the rack transport path 15, and sampling of the first container in the first rack is performed (reference symbol E). Further, although not illustrated, sampling is performed in the order of the second container to the fifth container for the first rack, and similarly, sampling is performed in the order of the first container to the fifth container for the second and subsequent racks.

According to the post-reagent amount check sampling described above, as illustrated in Figs. 4 (a) to 4 (c), inspection items are determined for all the specimen containers in the first rack to the tenth rack, which are used as reagent amount check units. Further, thereafter, sampling is performed in order from the first container in the first rack based on the inspection request content from the host computer 41. Note that when the inspection request is registered in the automatic analysis device in advance, sampling is performed based on the inspection request content. Therefore, for a group of specimen containers installed in the installation part (6), sampling can be started after detecting the inspection request content in advance in order from the first container in the first rack. Then, it becomes possible to detect the required amount of the reagent before the start of sampling for the group of specimen containers.

Further, before sampling, it is possible to detect the number of measurements for each inspection item for all specimen containers of a predetermined amount (here, corresponding to ten racks), which are reagent amount check units. Then, in the controller 31, when it can be determined that the reagent is not insufficient during measurement, sampling can be started, and when it can be determined that the reagent is insufficient, this fact can be reported to encourage the operator to replenish the reagent.

When the amount of reagent used can be determined by checking the amount of reagent in this way, the timing of reagent replenishment or replacement can be appropriately reported. In addition, it is possible to prevent unnecessary replenishment of the reagent and replacement after the start of measurement.

In addition, by detecting the time required for measurement in the reagent amount check unit in advance, it is possible to report a scheduled measurement end time for all the set specimen containers.

For example, in a facility such as a hospital, an operator generally carries and uses a plurality of devices . For this reason, after starting analysis in the automatic analysis device 2, it may be desired to be aware of a time from when another device is operated until returning to the automatic analysis device 2 to be able to set a subsequent specimen (specimen container). Then, in such a case, when inspection request content information is accumulated based on specimen identification information using a plurality of specimen containers as a set (as reagent amount check units), the reagent amount is checked, and then sampling is allowed to start, it becomes easily for the operator to determine a subsequent action, and work of the operator can be streamlined.

In addition, since sampling is started after accumulating inspection request content information for a predetermined number of (5 × 10 in this case) specimen containers, which are reagent amount check units, it is possible to promptly respond to occurrence of a problem when compared to a case where sampling is started while receiving inspection request content information for each specimen container (the case of the conventional sampling illustrated in Figs. 7 and 8) .

That is, in the above-mentioned conventional sampling (Figs. 7 and 8), since sampling is started while receiving inspection request content information for each specimen (specimen container), for example, when the second and subsequent specimen containers are in the state of ID identification (reference symbol B) or the state where inspection request content is being inquired about (reference symbol C), sampling may be started for a specimen container receiving inspection request content earlier.

However, in the case of occurrence of a problem such as a reading error for the identification ID or a reception error for inspection request content information in a subsequent specimen container during sampling, the corresponding rack may not be taken out, and it is difficult to take a prompt action to solve the problem. In addition, even when it is possible to take some measures to solve the problem, as described above, the operator leaves the automatic analysis device 2 after start of analysis in many cases. Further, when the operator returns to the automatic analysis device 2, the inspection may not be completed due to the interruption of the analysis (the inspection result acquisition may be delayed).

Therefore, by performing the post-reagent amount check sampling illustrated in Figs. 3 and 4, it is possible to complete reception of the inspection request content related to the predetermined number of (5 × 10 in this case) specimen containers, which are reagent amount check units, before start of sampling, and it is possible to prevent analysis from being interrupted as much as possible due to a problem caused by exchanging information with the host computer 41.

Note that even in a case where the post-reagent amount check sampling is performed, when the operator leaves the automatic analysis device 2 before reception of the inspection request contents related to all the specimen containers, analysis may be interrupted. However, since sampling is to be started, a time until occurrence of a problem related to exchange of information with the host computer 41 is limited to a short time required for ID identification or information communication. Further, by predetermining a business procedure in advance such that the operator leaves the automatic analysis device 2 after the information communication is completed, it is possible to prevent a problem occurring before the start of sampling from being left unattended, and to make effective use of the time. In addition, before the start of sampling, the rack can be taken out relatively easily, and an operation for checking and solving a problem becomes easy.

In addition, in general, in inspection by the automatic analysis device, even though the reagents used are different, measurement of the same type of measurement method may be continuously performed. Further, in a case where the automatic analysis device 2 of the present embodiment includes a plurality of photometric units used for a specific inspection, when there is an inspection request exceeding the number of photometric units, sampling of specimens scheduled for measurement using the photometric units is temporarily suspended, and measurement using the photometric units is completed first in some cases. As a countermeasure, by allowing start of sampling after accumulating the inspection request content information in advance using the post-reagent amount check sampling, it is possible to set the optimum priority according to various measuring means such as the photometric units.

Further, by performing the post-reagent amount check sampling, (1) it is possible to determine whether or not materials used for measurement are more than the number of measurements to be performed (measurement allowance determination) using, for example, the controller 31 as a measurement allowance determining means. Examples of the materials used for the measurement include system water, cuvette, reagent, detergent, etc. In addition, by performing the post-reagent amount check sampling, it is possible to determine the necessity of disposing of wastewater in a wastewater tank. Further, (2) it is possible to estimate a measurement time from now on, and for example, it is possible to predict a time until the measurement is completed in units of specimen containers (specimens) or in units of racks. Further, from the above items (1) and (2), it is possible to determine the replenishment timing such as whether the materials used for the measurement needs be replenished now or after the measurement.

Here, the above-mentioned "materials used for the measurement" can be referred to as "measurement resources". The "measurement resources" include the reaction vessel such as the above-mentioned cuvette. Further, the autosampler 1 and the automatic analysis device 2 can be configured so as to make a notification of measurement not allowed and suspend the measurement operation when it is determined that any of the measurement resources is insufficient by the above-mentioned measurement allowance determination.

Further, from these facts, according to the autosampler 1 and the automatic analysis device 2 of the present embodiment, it is possible to efficiently perform measurement with a small configuration, and further increase the performance of the small autosampler 1 or automatic analysis device 2. Further, according to the autosampler 1 and the automatic analysis device 2 of the present embodiment, it is possible to realize three functions of (1) determination of inspection items of all racks installed before start of measurement (post-reagent amount check sampling), (2) priority interrupt of racks, (3) automatic re-inspection based on an initial inspection result.

Here, the above-mentioned Patent Document 1 (JP 2010-181197 A) describes that analysis is performed in an advanced order of analysis (paragraph 0050, etc.). However, the invention described in Patent Document 1 determines the analysis order by a rack buffer part, and is different from the autosampler 1 and the automatic analysis device 2 of the present embodiment in which the amount of the reagent is checked with the position of the rack 4 at the same position as that at the time of initial mounting, so that the optimal priority can be determined while taking advantage of miniaturization.

In addition, both a function of the post-reagent amount check sampling and a function of the conventional sampling may coexist in one autosampler 1 or automatic analysis device 2, and the operator may switch the functions as necessary to perform sampling and analysis.

Note that in the present embodiment, a state in which the maximum number of (ten in this case) racks 4 that can be installed are installed in the installation part, and the maximum number of (five in this case) specimen containers 3 that can be held are held in the rack 4 is given as an example. However, it is not necessary to transport the maximum number of racks 4 or specimen containers 3 at all times.

For example, in a hospital that has an inpatient ward and many inpatients, a large number of specimens collected for inspection are gathered during the morning hours of the day, specimens of outpatients, etc. are brought in at any time during the subsequent hours, and a gathering condition of the specimen containers 3 (specimens) fluctuates. Further, even when there is a vacancy in the installation part (6) or the rack 4, the autosampler 1 and the automatic analysis device 2 of the present embodiment can perform the post-reagent amount check sampling using a specimen container on the installation part (6) as a unit at that time. That is, the post-reagent amount check sampling can be performed while changing the unit for checking the reagent amount according to the status.

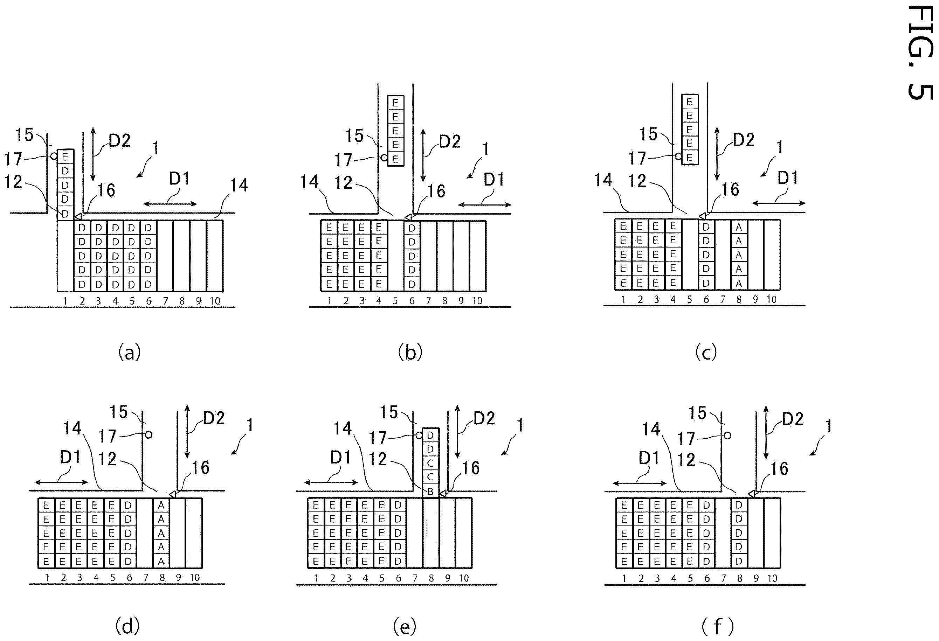

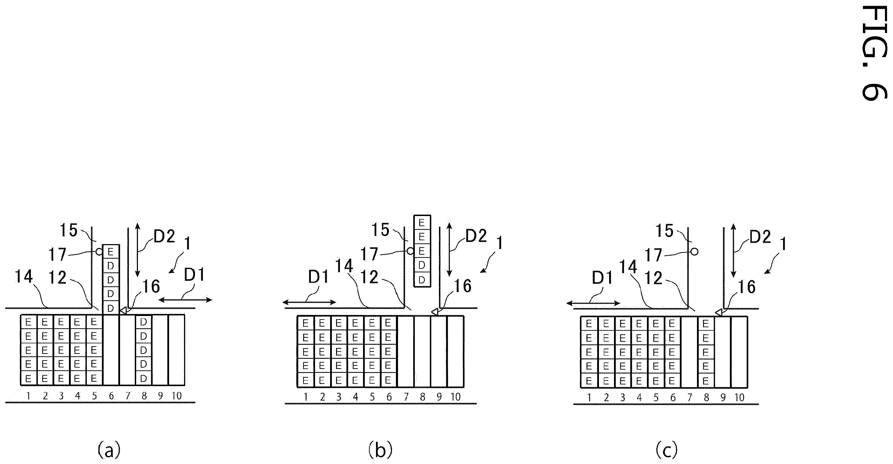

Figs. 5 (a) to 5 (f) and Figs. 6 (a) to 6 (c) illustrate an example of a sampling method when a rack is added to an installation region of an eighth rack after sampling is started for six racks of the first rack to the sixth rack. That is, in Fig. 5(a), six racks (the first rack to the sixth rack) are installed on the installation part, and five specimen containers (3) are held in each rack.

Further, all the specimen containers of the first rack to the sixth rack are in the state of "inspection request content received" indicated by reference symbol D. In addition, in the installation part, racks are not installed in an installation region (reference symbol omitted) for a seventh rack to a tenth rack, and the installation region for the seventh rack to the tenth rack is in a vacant state.

Sampling is started since completion of processing up to the state of "inspection request content received" (reference symbol D) for all the specimen containers. Further, in the example of Fig. 5(a), the first rack is sent out to the rack transport path 15, and the first container is in the state of "sampling in progress or sampling completed" indicated by reference symbol E. Thereafter, sampling is successively performed, and in the example of Fig. 5(b), containers up to the fifth container of the fifth rack are in the state of "sampling in progress or sampling completed" (reference symbol E) .

In the subsequent Fig. 5(c), a rack (eighth rack) is newly installed in an eighth installation region while the fifth rack is in the rack transport path 15. In this instance, all specimen containers in the sixth rack are in the state of "inspection request content received" (reference symbol D), and all specimen containers in the eighth rack are in the state of "before ID identification" (reference symbol A). Then, in such a state, as illustrated in Fig. 5(d), the installation part is moved in the forward direction (direction from right to left in the figure) of the installation part transport path 14, and the eighth rack reaches the transport position 12.

As illustrated in Fig. 5 (e), the eighth rack is sent out to the rack transport path 15, and identification information is read or inspection request content is inquired about. In the example of Fig. 5(e), the first container and the second container in the eighth rack are in the state of "inspection request content received" (reference symbol D), and the third container and the fourth container are in the state where "inspection request content is being inquired about" (reference symbol C). In addition, the fifth container is in the state of "ID identified (ID reading succeeded)" (reference symbol B). Further, all specimen containers in the sixth rack are in the state of "inspection request content received" (reference symbol D).

Subsequently, in Fig. 5(f), the eighth rack is returned to the installation part, and all the specimen containers in the eighth rack are in the state of "inspection request content received" (reference symbol D). Thereafter, as illustrated in Fig. 6(a), the installation part is moved in the backward direction (direction from left to right in the figure) of the installation part transport path 14, and the sixth rack is guided to the transport position 12. In the example of Fig. 6(a), the sixth rack is sent out to the rack transport path 15, and the first container of the sixth rack is in the state of "sampling in progress or sampling completed" (reference symbol E). In addition, the second container to fifth container in the sixth rack are still in the state of "inspection request content received" (reference symbol D).

When all the specimen containers in the sixth rack are in the state of "sampling in progress or sampling completed" (reference symbol E), the sixth rack is returned to the installation part as illustrated in Fig. 6(b). Further, the installation part is moved in the forward direction (direction from right to left in the figure) of the installation part transport path 14, and then the eighth rack is guided to the transport position 12. Then, the eighth rack is sent out to the rack transport path 15, and sampling is started in order from the first container. In the example of Fig. 6 (b), the first container to the third container of the eighth rack are in the state of "sampling in progress or sampling completed" (reference symbol E). The fourth container and the fifth container are still in the state of "inspection request content received" (reference symbol D).

When all the specimen containers in the eighth rack are in the state of "sampling in progress or sampling completed" (reference symbol E), the eighth rack is returned to the installation part as illustrated in Fig. 6(c). In this way, when sampling for all the specimen containers is completed for the first rack to the sixth rack and the eighth rack installed in the installation part, these rack groups are transported in the forward direction on the rack transport path 15.

As described above, the autosampler 1 and the automatic analysis device 2 of the present embodiment can perform sampling for a rack or a specimen container added in the middle of post-reagent amount check sampling while adjusting the order by a small configuration. In addition, sampling for racks added later can be performed in preference to a rack for which inspection request content is inquired about.

In addition, when specimens (here, all specimens in the eighth rack) are added in this way, the amount of the reagent may be automatically checked for the added specimens (additional specimens) after completing measurement of read specimens at that time. Such a processing operation may be regarded as a batch operation in which checking of the amount of the reagent and measurement are repeated in order.

Note that the invention can be variously modified without departing from the gist.

### EXPLANATIONS OF LETTERS OR NUMERALS

1 AUTOSAMPLER
2 AUTOMATIC ANALYSIS DEVICE
3 SPECIMEN CONTAINER
4 RACK
6 INSTALLATION PART
11 INSTALLATION PART MOVEMENT MECHANISM (INSTALLATION PART MOVING MEANS)
12 TRANSPORT POSITION
13 RACK MOVEMENT MECHANISM (RACK MOVING MEANS)
14 INSTALLATION PART TRANSPORT PATH
15 RACK TRANSPORT PATH
16 READING PART
17 SPECIMEN COLLECTION MECHANISM
23 RACK STATE LAMP
26, 27 IDENTIFICATION INFORMATION RECORDING PART
31 CONTROLLER
32 INSTALLATION PART MOVEMENT PROCESSING UNIT (INSTALLATION PART MOVING MEANS)
33 RACK MOVEMENT PROCESSING UNIT (RACK MOVING MEANS)
37 RACK DETECTION UNIT
41 HOST COMPUTER

## Claims

1. An autosampler for sending out a rack holding one or a plurality of specimen containers from a predetermined transport position, inquiring of a management computer about an inspection item based on identification information attached to the specimen container or collating an inspection item registered in an automatic analysis device thereof, and sampling a specimen from the specimen container based on a response from the management computer or the automatic analysis device, the autosampler comprising:
an installation part allowing a plurality of racks to be installed therein;
an installation part moving means capable of moving the installation part back and forth in a predetermined installation part transport direction, the installation part moving means successively transferring the plurality of racks to the transport position; and
a rack moving means capable of moving the racks at the transport position back and forth in a predetermined rack transport direction, the rack moving means moving the racks forward in the rack transport direction to send out the racks from the installation part, and moving the racks backward to send the racks back to the installation part after specimens are sampled from the specimen containers held in the racks,
wherein the racks are transferred to the transport position by moving the installation part forward or backward as necessary, and
sampling is started after completing accumulation of information about the inspection item corresponding to a specimen contained in the specimen container on the installation part.

2. The autosampler according to claim 1, further comprising
a measurement allowance determining means for comparing accumulation content of the information about the inspection item with measurement resources necessary for inspection of the accumulation content,
wherein when it is determined that the measurement resources are insufficient, a notification of measurement not allowed is made, and a measurement operation is suspended.

3. An automatic analysis device comprising
the autosampler according to claim 1 or 2.

4. A sampling method for sending out a rack holding one or a plurality of specimen containers from a predetermined transport position, inquiring of a management computer about an inspection item based on identification information attached to the specimen container or collating an inspection item registered in an automatic analysis device thereof, and sampling a specimen from the specimen container based on a response from the management computer or the automatic analysis device, the sampling method comprising:
a first step of successively transferring, by an installation part moving means capable of moving an installation part of the rack back and forth in a predetermined installation part transport direction, a plurality of racks installed in the installation part to the transport position as necessary;
a second step of moving, by a rack moving means, the racks at the transport position forward in a predetermined rack transport direction to send out the racks; and
a third step of starting sampling after completing accumulation of information about the inspection item using the specimen container on the installation part as a unit.

5. The sampling method according to claim 4, further comprising
a fourth step of comparing accumulation content of the information about the inspection item with measurement resources necessary for inspection of the accumulation content, and making a notification of measurement not allowed and suspending a measurement operation when it is determined that the measurement resources are insufficient.

6. A method of automatically inspecting a specimen performed using a specimen sampled by the sampling method according to claim 4 or 5.
